# FASCICULE DE BREVET EUROPEEN

(11) **EP 2 343 572 B1**
(45) Date de publication et mention de la délivrance du brevet: **22.04.2015**
(21) Numéro de dépôt: 10196621.6
(22) Date de dépôt: 22.12.2010
(51) Int. Cl.: G01S 13/78, H03G 3/30

(54) **Dispositif de détection de signaux impulsionnels à sensibilité améliorée**
Vorrichtung zum Erfassen von Impulssignalen mit verbesserter Empfindlichkeit
Device for detecting impulse signals with improved sensitivity

(30) Priorité: 30.12.2009 FR 0906396
(43) Date de publication de la demande: 13.07.2011
(73) Titulaire: Thales, 92200 Neuilly Sur Seine (FR)
(72) Inventeur: Boulanger, Emilie, 92700 Colombes (FR); Letellier, Frankie, 92700 Colombes (FR)
(74) Mandataire: Collet, Alain

(56) Documents cités:
- EP-A1- 0 560 658
- EP-A2- 0 434 355
- WO-A1-2010/139502
- US-A- 5 387 915
- US-A1- 2006 197 700

## Description

La présente invention concerne un dispositif de détection de signaux impulsionnels à sensibilité améliorée. Elle peut s'appliquer plus particulièrement au domaine des systèmes de radars secondaires, notamment utilisés dans des systèmes de détection et d'identification d'aéronefs, et plus précisément des chaînes de détection utilisées dans ces systèmes. Plus généralement, la présente invention s'applique à des chaînes de réception de signaux impulsionnels ou de séquences d'impulsions non modulées en phase.

Les radars secondaires, communément désignés par le sigle SSR correspondant à la terminologie anglaise de "Secondary Surveillance Radar" sont largement utilisés dans le domaine de la détection de cibles aériennes. Des radars secondaires équipent typiquement des plateformes terrestres fixes, et sont souvent couplés à des radars primaires. Des radars secondaires peuvent également équiper des plateformes terrestres ou aériennes mobiles. Les radars secondaires peuvent également être désignés selon le sigle IFF, correspondant à la terminologie anglaise de "Identification Friend or Foe", ou identification d'amis ou d'ennemis. L'IFF, initialement conçue pour la discrimination entre des cibles amies ou ennemies, est désormais déclinée dans une pluralité de modes, utilisés notamment dans l'aéronautique civile, pour la détection d'aéronefs équipés de transpondeurs. Les transpondeurs équipant les aéronefs émettent des signaux de façon spontanée sur base périodique, ou en réponse à des signaux d'interrogation spécifiques émis par des radars secondaires ou interrogateurs. Les radars secondaires ou interrogateurs captent les signaux émis par les transpondeurs. Une spécificité des signaux émis par les transpondeurs, dits SIF selon l'acronyme correspondant à la terminologie anglaise "Selective Identification Feature", est que ceux-ci se présentent sous la forme de trains d'impulsions, non modulées en phase. Un certain nombre d'impulsions sont émises, habituellement délimitées par deux impulsions dites "d'encadrement" prévues à cet effet, communément désignées selon le terme anglais "brackets" : l'absence ou la présence d'impulsions dans des messages de durée déterminée, constitue un mot logique contenant certaines informations propres à l'aéronef, telles que son identification, son altitude, etc. Par exemple, il est possible de citer le mode A, dans lequel le transpondeur d'un aéronef transmet un code d'identification SSR, le code permettant notamment d'associer, dans un système de poursuite radar, l'identification d'un aéronef à un plot radar. On peut également citer le mode C, dans lequel une information d'altitude est ajoutée, l'information pouvant par exemple être affichée sur un écran de contrôle d'un centre de contrôle du trafic aérien, en association avec le plot radar correspondant à l'aéronef. Dans la plupart des modes considérés, un transpondeur émet un message constitué d'une séquence définie par une pluralité d'impulsions, les impulsions étant émises à une fréquence caractéristique non modulée. La chaîne de détection du radar secondaire opère alors un décodage des mots lui parvenant sous cette forme, en détectant l'absence ou la présence des impulsions comprises entre les impulsions de type "brackets", délimitant les mots.

Cependant, la détection peut parfois être délicate, notamment lorsque les cibles sont lointaines et/ou que le signal est fortement perturbé par le bruit. Dans de tels cas, le rapport signal à bruit peut être très faible, et requérir une très faible sensibilité de détection, nécessitant ainsi la mise en oeuvre de moyens perfectionnés dans le but de permettre une détection de cibles satisfaisant les contraintes réglementaires. En outre, la diversité des cibles, plus ou moins éloignées du radar secondaire, impose aux chaînes de détection de couvrir une grande dynamique d'entrée, typiquement de - 22 dBm à -84 dBm.

Parmi les solutions techniques connues de l'état de la technique, une technique particulièrement avantageuse consiste à utiliser un amplificateur logarithmique, capable de couvrir une grande dynamique d'entrée, et d'exploiter une sortie de l'amplificateur logarithmique, dite sortie RSSI ou encore sortie "vidéo", le sigle RSSI désignant l'expression anglaise "Received Signal Strength Intensity" ou intensité de la puissance du signal reçu. La sortie RSSI restitue ainsi un signal de type enveloppe, représentatif du niveau de réception. La sortie RSSI de l'amplificateur logarithmique est alors reliée à un convertisseur analogique - numérique de grande résolution pour un traitement numérique des données.

Le document EP 0 560 658 décrit un procédé et un dispositif de détection de mélanges d'impulsions reçues par un radar secondaire, opérant par analyse de phase. L'analyse de phase opérée par le dispositif décrit dans le document D1, consiste à apprécier l'écart de phase entre le signal fourni par la voie somme d'une chaîne de réception d'un radar secondaire comprenant une antenne de réception mono impulsion et le signal fourni par la voie différence de celle-ci.

Le document WO2010/139502 décrit un processus de contrôle de phase dans le cas de réception d'interrogations/réponses en mode S qui vise à vérifier la cohérence de phase entre plusieurs impulsions d'interrogation/réponse.

Un but de la présente invention est de pallier au moins les inconvénients précités, en proposant un dispositif de détection de signaux impulsionnels à sensibilité améliorée, permettant de détecter des signaux impulsionnels présentant de faibles rapports signal à bruit.

Un avantage de l'invention est qu'elle peut être aisément mise en oeuvre dans des dispositifs déjà connus de détection de signaux impulsionnels.

Un autre avantage de l'invention est que l'invention portant sur des signaux non modulés, il est possible de diminuer la bande passante du signal spécifiquement pour le traitement mis en oeuvre par le dispositif faisant l'objet de l'invention.

A cet effet, l'invention a pour objet un dispositif pour radar secondaire de détection de signaux impulsionnels non modulés en phase ou de séquences d'impulsions d'une fréquence déterminée, comprenant au moins un amplificateur recevant un signal radiofréquence, et restituant au moins un premier signal représentatif de l'enveloppe du signal d'entrée, et un second signal normalisé, caractérisé en ce qu'il comporte un module d'estimation de la stabilité de la phase comprenant des moyens d'estimation de la phase du signal radiofréquence mesurant la phase dudit second signal normalisé par rapport à un signal périodique de référence, lesdits moyens d'estimation restituant une information de phase du signal, des moyens d'analyse pour évaluer la stabilité temporelle de la phase, lesdits moyens d'analyse étant configurés pour évaluer les variations de la phase dans une fenêtre temporelle déterminée en amont d'un instant donné.

Les moyens sont configurés, par exemple, pour évaluer les variations de la phase dans une fenêtre temporelle déterminée en amont d'un instant donné par rapport à un gabarit de référence défini, la présence d'une impulsion caractéristique étant détectée si la phase est stable selon des critères déterminés. Dans un mode de réalisation de l'invention, le dispositif de détection peut être caractérisé en ce que l'amplificateur est un amplificateur logarithmique.

Dans un mode de réalisation de l'invention, le dispositif de détection de signaux peut être caractérisé en ce que les moyens d'estimation de la phase du signal radiofréquence sont mis en oeuvre par un module de prétraitement transposant le signal normalisé en bande de base, un démodulateur décomposant le signal normalisé en composantes en phase et quadrature, les composantes étant filtrées par des filtres passe-bas de fréquences de coupure supérieures à la fréquence déterminée des séquences d'impulsions, un module d'estimation de phase déterminant alors la valeur de la phase du signal radiofréquence égale à l'arc-tangente du rapport entre les composantes de quadrature et en phase arctan(Q/I), un module d'analyse évaluant la stabilité de la phase pendant une fenêtre temporelle de durée déterminée.

Dans un mode de réalisation de l'invention, le dispositif de détection de signaux peut être caractérisé en ce que les module de prétraitement, démodulateur, filtres passe-bas, module d'estimation de phase et module d'analyse réalisent des traitements numériques, après conversion des signaux analogiques par un convertisseur analogique - numérique.

Dans un mode de réalisation de l'invention, le dispositif de détection de signaux peut être caractérisé en ce que le module d'analyse évalue la stabilité de la phase, en comptant le nombre H d'échantillons, parmi une pluralité d'échantillons du signal de phase en amont d'un échantillon à un instant tₙ de phase ϕₒ, dont la phase ϕₖ est comprise dans un gabarit de référence défini par une valeur seuil déterminée ξ autour de la phase ϕₒ.

Dans un mode de réalisation de l'invention, le dispositif de détection de signaux peut comprendre un module de détection réalisant la détection d'impulsions caractéristiques à partir du premier signal restitué par l'amplificateur, et peut être caractérisé en ce que le module d'estimation de la phase confirme la présence d'une impulsion détectée par le module de détection si la phase est stable, ou infirme la présence d'une impulsion détectée sinon.

D'autres caractéristiques et avantages de l'invention apparaîtront à la lecture de la description, donnée à titre d'exemple, faite en regard des dessins annexés qui représentent :
- la figure 1, le schéma de principe d'une chaîne de détection de signaux impulsionnels connue de l'état de la technique ;
- la figure 2, le schéma de principe d'une chaîne de détection de signaux impulsionnels selon un mode de réalisation de la présente invention ;
- la figure 3, le schéma de principe d'une chaîne de traitement associée à un dispositif de détection de signaux impulsionnels, selon un mode de réalisation de l'invention ;
- la figure 4, une courbe illustrant l'évolution temporelle d'un signal représentatif de la phase du signal reçu par un dispositif de détection, selon un mode de réalisation de l'invention ;
- la figure 5, le schéma de principe global d'un dispositif de détection de signaux impulsionnels selon un mode de réalisation de l'invention.

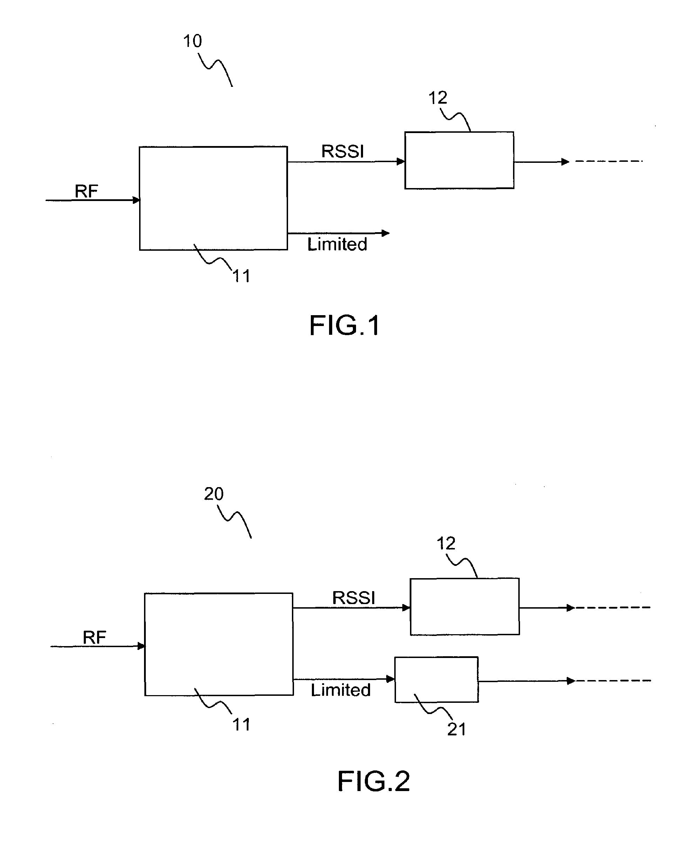

La figure 1 présente le schéma de principe d'une chaîne de détection de signaux impulsionnels connue de l'état de la technique.

Une chaîne de détection 10 de signaux impulsionnels non modulés en phase, peut notamment comprendre un amplificateur 11 recevant en entrée un signal radiofréquence, et restituant un signal de type RSSI représentatif de l'intensité du signal reçu. Un module de détection d'impulsion 12 reçoit en entrée le signal de type RSSI. Le module de détection peut comprendre des blocs de filtrage et un bloc d'analyse, opérant par exemple directement sur des signaux analogiques, ou bien mis en oeuvre dans un circuit numérique après conversion des signaux analogiques à traiter par un convertisseur analogique-numérique.

D'une manière typique et en elle-même connue de l'état de la technique, l'amplificateur 11 peut être un amplificateur de type logarithmique. Des amplificateurs logarithmiques sont par exemple disponibles dans le commerce sous la forme de composants électroniques standards, dits COTS, selon le sigle désignant l'expression anglaise "Commercial Off The Shelf". L'amplificateur 11 peut également être mis en oeuvre sous la forme d'un circuit intégré, ainsi que les divers éléments de la chaîne de détection 10. Les amplificateurs logarithmiques comprennent usuellement une sortie de type RSSI, ainsi qu'une sortie dite de type communément désigné "limited", restituant un signal normalisé, c'est-à-dire dont l'amplitude est indépendante de la puissance du signal en entrée du récepteur. La sortie normalisée est habituellement utilisée lorsque l'amplificateur est intégré dans une chaîne de détection de signaux modulés en phase. La sortie normalisée est en revanche inexploitée lorsque l'amplificateur logarithmique est utilisé dans une chaîne de détection de signaux impulsionnels non modulés en phase.

Le principe de la présente invention repose sur l'exploitation du signal restitué par la sortie normalisée d'un amplificateur de type logarithmique, afin d'en extraire des informations de phase du signal d'entrée, par exemple par rapport à un signal périodique de référence. L'information de phase est alors analysée de manière à détecter la présence d'impulsions dans le signal d'entrée, ou bien d'infirmer ou confirmer la présence d'une impulsion diagnostiquée par le module de détection d'impulsion 12, s'appuyant d'une manière en elle-même connue sur l'analyse de la puissance du signal d'entrée.

La figure 2 présente le schéma de principe d'une chaîne de détection de signaux impulsionnels selon un mode de réalisation de la présente invention.

Une chaîne de détection de signaux impulsionnels 20 comprend par exemple, d'une manière similaire à la chaîne de détection connue décrite ci-dessus en référence à la figure 1, un amplificateur 11 attaqué par le signal radiofréquence d'entrée, un module de détection d'impulsion 12 exploitant la sortie RSSI de l'amplificateur 11, de type amplificateur logarithmique dans l'exemple illustré par la figure. Dans l'exemple de réalisation de l'invention, la sortie normalisée de l'amplificateur 11 est convertie par un convertisseur analogique - numérique 21 ; bien sûr, il est également possible de ne pas recourir à un convertisseur, et d'opérer des traitements analogiques directement sur le signal analogique. Un traitement numérique présente notamment l'avantage de présenter des coûts de développement et de mise au point plus faibles. Le traitement peut par exemple être mis en oeuvre dans des composants à fréquence de fonctionnement rapide, par exemple dans des composants à logique programmable, communément désignés par le terme FPGA désignant l'expression anglaise "Field Programmable Gate Array", ou bien dans des circuits logiques dédiés communément désignés par le terme ASIC. Avantageusement, il est possible de disposer un filtre additionnel, par exemple un filtre numérique en aval du convertisseur numérique - analogique. Ce filtre numérique permet de diminuer la largeur de la bande passante, requise notamment pour assurer la détection des fronts montants des impulsions.

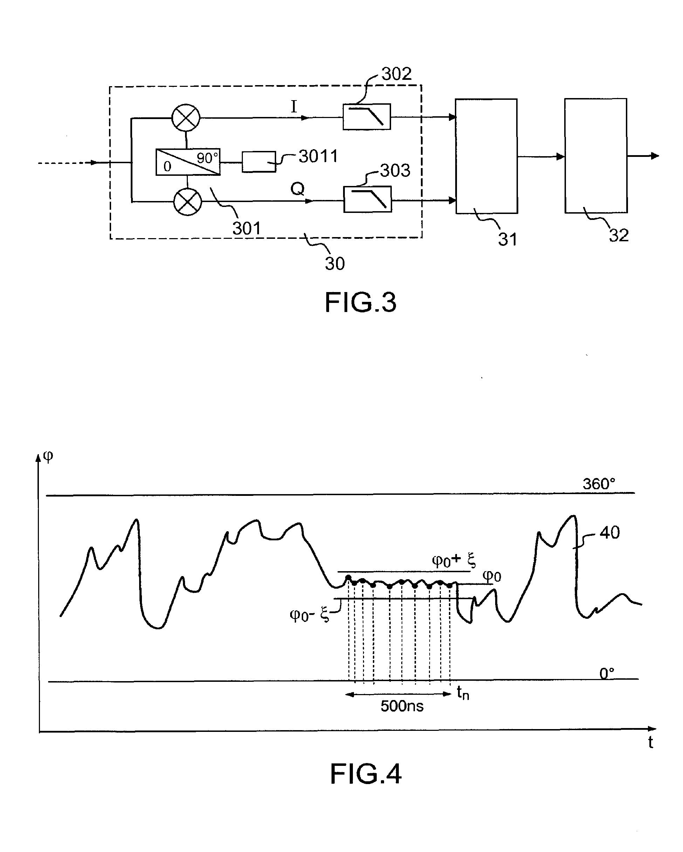

La présente invention propose d'exploiter le signal de la sortie normalisée de l'amplificateur 11, afin d'en extraire une information quant à la phase du signal d'entrée. En effet, ainsi que cela est décrit en détails ci-après en référence à la figure 4, en présence d'un bruit, notamment d'un bruit blanc gaussien, le rapport signal à bruit du signal reçu peut être trop faible pour permettre la détection d'impulsions par l'analyse de la sortie RSSI de l'amplificateur. En revanche, la phase du signal d'entrée, par exemple par rapport à un signal périodique de référence, est globalement peu affectée par le bruit. De la sorte, un signal représentatif de la phase du signal d'entrée présente, lorsque seulement du bruit est présent, une grande variabilité, entre 0 et 2π ; en revanche, en présence d'une impulsion, le signal représentatif de la phase du signal d'entrée présente une variabilité plus faible, autour d'une phase ϕₒ aléatoire comprise entre 0 et 2π. Ainsi, l'appréciation de la stabilité du signal représentatif de la phase permet la détection d'impulsions.

La figure 3 présente le schéma de principe d'une chaîne de traitement associée à un dispositif de détection de signaux impulsionnels, selon un mode de réalisation de l'invention.

Le signal issu de la sortie normalisée de l'amplificateur 11, en référence aux figures 1 et 2, après conversion éventuelle par le convertisseur analogique - numérique 21, peut attaquer l'entrée d'un module de prétraitement 30, suivi d'un module d'estimation de phase 31, suivi d'un module d'analyse 32.

Le module d'estimation de phase 31 permet de restituer une information de phase du signal issu de la sortie normalisée de l'amplificateur, par rapport à un signal de référence. Dans l'exemple illustré par la figure, le module de prétraitement 30 permet la transposition en bande de base du signal issu de la sortie normalisée de l'amplificateur, par une décomposition en composantes en phase (I) et quadrature (Q), via un démodulateur I/Q 301. Le démodulateur I/Q 301 peut notamment comprendre, d'une manière également en elle-même connue, un oscillateur local 3011 délivrant un signal périodique de référence. Chacune des composantes peut être alors filtrée par un filtre passe-bas 302, 303. Les filtres passe-bas 302, 303 permettent de ne conserver que les fréquences correspondant aux signaux utiles attendus. Par exemple, la fréquence d'émission par les transpondeurs fonctionnant dans un des modes précités, est typiquement de 1090 MHz. II est ainsi par exemple possible de concevoir les filtres passe-bas 302, 303 de manière à ce que leur fréquence de coupure soit de l'ordre de 2 à 4 MHz. La transposition en bande de base rend l'estimation de la phase plus aisée. Le filtrage du signal transposé par les filtres passe-bas 302, 303 a également pour effet de permettre la réjection des raies images issues de la transposition I/Q.

Dans l'exemple illustré par la figure 3, le module d'estimation de phase 31 peut par exemple mettre en oeuvre un calcul de l'arc-tangente du rapport entre les composantes en quadrature et en phase : arctan(Q/I).

D'autres méthodes connues d'estimation de la phase peuvent bien sûr également être mises en oeuvre dans un dispositif selon la présente invention. Il est par exemple possible de citer l'utilisation d'une ligne à retard permettant le calcul du produit scalaire de deux échantillons de signaux A et B faiblement espacés, ou encore la mise en oeuvre d'un algorithme dit de Cordic.

La figure 4 présente une courbe illustrant l'évolution temporelle d'un signal représentatif de la phase du signal reçu par un dispositif de détection, selon un mode de réalisation de l'invention.

Un exemple de variation temporelle d'un signal représentatif de la phase du signal d'entrée par rapport à un signal de référence, est illustré par une courbe 40. En présence de bruit de fond, la phase varie de manière aléatoire entre 0 et 2π. En présence d'une impulsion, la phase reste centrée sur une valeur ϕₒ, pendant une durée correspondant sensiblement à la durée d'une impulsion de type SIF, par exemple de 450 ns. Le module d'analyse 32, en référence à la figure 3, comprend des moyens d'appréciation de la variabilité du signal de phase, dont un exemple de mise en oeuvre est décrit ci-après. L'appréciation de la variabilité de phase peut consister, dans l'exemple où le traitement est mis en oeuvre dans la chaîne de détection de manière numérique, à déterminer via un compteur, pour un nombre déterminé N d'échantillons de phase ϕₖ en amont d'un échantillon réalisé à un instant tₙ, le nombre H d'entre eux dont la phase est supérieure à ϕ₀ + ξ ou inférieure à ϕ₀ - ξ, ξ étant une valeur seuil choisie. Le seuil ξ définit un gabarit de référence, illustré sur la figure par une bande horizontale de largeur 2ξ, couvrant dix échantillons espacés de 50 ns, en amont de l'instant tₙ correspondant à l'échantillon de phase ϕₒ. Bien entendu, d'autres méthodes de détermination de la variabilité du signal de phase peuvent être envisagées, mises en oeuvre dans des chaînes d'analyse numériques ou analogiques. D'une manière générale, le module d'analyse 32 apprécie les variations de la phase dans une fenêtre temporelle déterminée en amont d'un instant donné, par rapport à un gabarit de référence.

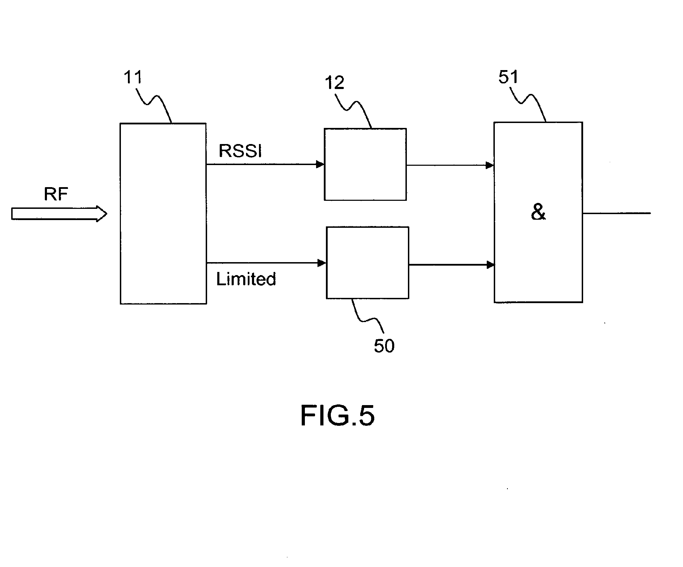

La figure 5 présente le schéma de principe global d'un dispositif de détection de signaux impulsionnels selon un mode de réalisation de l'invention.

Dans un exemple de réalisation de l'invention, il est possible d'exploiter l'information relative à la phase du signal d'entrée, de manière à confirmer ou infirmer la présence d'une impulsion détectée via des moyens en eux-mêmes connus, sur la base d'une analyse du signal RSSI fourni par l'amplificateur.

De façon synoptique, un dispositif de détection peut comprendre l'amplificateur 11 recevant en entrée un signal radiofréquence, l'amplificateur 11 comprenant notamment une sortie RSSI attaquant le module de détection d'impulsion 12, le module de détection d'impulsion 12 étant apte à diagnostiquer sur la base du signal RSSI, la présence d'une impulsion, et de restituer un signal représentatif de la présence ou de l'absence d'impulsion, ce signal étant par exemple un signal de type booléen prenant un état logique donné en présence d'impulsion. L'amplificateur 11 comporte également une sortie normalisée attaquant un module d'estimation de la stabilité de la phase 50, comprenant par exemple le module de prétraitement 30, le module d'estimation de phase 31, et le module d'analyse 32, tels que décrits précédemment en référence à la figure 3. Le module d'estimation de la stabilité de la phase 50 restitue ainsi en sa sortie, un signal représentatif de la stabilité de la phase du signal radiofréquence, ce signal étant par exemple également un signal de type booléen. Les sorties respectives du module de détection d'impulsion 12 et du module d'estimation de la stabilité de la phase 50 attaquent un module de confirmation de détection d'impulsion 51. Par exemple, dans une mise en oeuvre simple par des traitements numériques, le module de confirmation de détection 51 réalise une opération de type "ET" logique sur les deux signaux d'entrées qui dans cet exemple sont de type booléen.

## Revendications

1. Dispositif pour radar secondaire de détection de signaux impulsionnels non modulés en phase ou de séquences d'impulsions d'une fréquence déterminée, comprenant au moins un amplificateur (11) recevant un signal radiofréquence, et restituant au moins un premier signal (RSSI) représentatif de l'enveloppe du signal d'entrée, et un second signal normalisé, **caractérisé en ce qu'**il comporte un module d'estimation de la stabilité de la phase (50) comprenant des moyens d'estimation de la phase (31) du signal radiofréquence mesurant la phase dudit second signal normalisé par rapport à un signal périodique de référence, lesdits moyens d'estimation (31) restituant une information de phase du signal, des moyens d'analyse (32) pour évaluer la stabilité temporelle de la phase, lesdits moyens d'analyse (32) configurés pour évaluer les variations de la phase dans une fenêtre temporelle déterminée en amont d'un instant donné.

2. Dispositif de détection de signaux selon la revendication 1, caractérisé les moyens sont configurés pour évaluer les variations de la phase dans une fenêtre temporelle déterminée en amont d'un instant donné par rapport à un gabarit de référence..

3. Dispositif de détection de signaux selon la revendication 1, **caractérisé en ce que** l'amplificateur (11) est un amplificateur logarithmique.

4. Dispositif de détection de signaux selon l'une quelconque des revendications précédentes, **caractérisé en ce que** les moyens d'estimation de la phase du signal radiofréquence sont mis en oeuvre par un module de prétraitement (30) transposant le signal normalisé en bande de base, un démodulateur (301) décomposant le signal normalisé en composantes en phase (I) et quadrature (Q), les composantes étant filtrées par des filtres passe-bas (302, 303) de fréquences de coupure supérieures à la fréquence déterminée des séquences d'impulsions, un module d'estimation de phase (31) déterminant alors la valeur de la phase du signal radiofréquence égale à l'arc-tangente du rapport entre les composantes de quadrature et en phase arctan(Q/I), un module d'analyse (32) évaluant la stabilité de la phase pendant une fenêtre temporelle de durée déterminée.

5. Dispositif de détection de signaux selon la revendication 4, **caractérisé en ce que** les module de prétraitement (30), démodulateur (301), filtres passe-bas (302, 303), module d'estimation de phase (31) et module d'analyse (32) réalisent des traitements numériques, après conversion des signaux analogiques par un convertisseur analogique - numérique (21).

6. Dispositif de détection de signaux selon la revendication 5, **caractérisé en ce que** le module d'analyse (32) évalue la stabilité de la phase, en comptant le nombre (H) d'échantillons, parmi une pluralité d'échantillons du signal de phase en amont d'un échantillon à un instant tₙ de phase ϕₒ, dont la phase ϕₖ est comprise dans un gabarit de référence défini par une valeur seuil déterminée (ξ) autour de la phase ϕ₀.

7. Dispositif de détection de signaux selon l'une quelconque des revendications 2 à 6, comprenant un module de détection (12) réalisant la détection d'impulsions caractéristiques à partir du premier signal (RSSI) restitué par l'amplificateur (11), **caractérisé en ce que** le module d'estimation de la phase (50) confirme la présence d'une impulsion détectée par le module de détection (12) si la phase est stable, ou infirme la présence d'une impulsion détectée sinon.

## Patentansprüche

1. Vorrichtung für ein Sekundärradar zum Erkennen von nicht phasenmodulierten Impulssequenzen oder von Sequenzen von Impulsen mit einer bestimmten Frequenz, die wenigstens einen Verstärker (11) zum Empfangen eines Funkfrequenzsignals und zum Rekonstituieren von wenigstens einem ersten Signal (RSSI) umfasst, das die Hüllkurve des Eingangssignals repräsentiert, und eines zweiten normalisierten Signals, **dadurch gekennzeichnet, dass** sie ein Modul (50) zum Schätzen der Stabilität der Phase mit Mitteln (31) zum Schätzen der Phase des Funkfrequenzsignals die die Phase des zweiten normalisierten Signals relativ zu einem periodischen Referenzsignal messen, wobei die Schätzmittel (31) eine Phaseninformation des Signals rekonstituieren, und Analysemittel (32) zum Beurteilen der zeitlichen Stabilität der Phase umfasst, wobei die Analysemittel (32) zum Beurteilen der Variationen der Phase in einem bestimmten Zeitfenster vor einem gegebenen Zeitpunkt konfiguriert ist.

2. Signalerkennungsvoruchtung nach Anspruch 1, **dadurch gekennzeichnet, dass** die Mittel zum Beurteilen der Variationen der Phase in einem bestimmten Zeitfenster vor einem gegebenen Zeitpunkt relativ zu einer Referenzschablone konfiguriert sind.

3. Signalerkennungsvoruchtung nach Anspruch 1, **dadurch gekennzeichnet, dass** der Verstärker (11) ein logarithmischer Verstärker ist.

4. Signalerkennungsvoruchtung nach einem der vorherigen Ansprüche, **dadurch gekennzeichnet, dass** die Mittel zum Schätzen der Phase des Funkfrequenzsignals durch ein Vorverarbeitungsmodul (30) implementiert werden, das das normalisierte Signal in Basisband transponiert, wobei ein Demodulator (301) das normalisierte Signal in Phasen-(I) und Quadratur-(Q) Komponenten zerlegt, wobei die Komponenten durch Tiefpassfilter (302, 303) mit Grenzfrequenzen gefiltert werden, die höher sind als die bestimmte Frequenz der Impulssequenzen, wobei ein Phasenschätzmodul (31) dann den Wert der Phase des Funkfrequenzsignals ermittelt, die gleich dem Arkustangens des Verhältnisses zwischen den Arctan-(Q/I)-Quadratur- und -Phasenkomponenten ist, wobei ein Analysemodul (32) die Stabilität der Phase während eines Zeitfensters von ermittelter Dauer beurteilt.

5. Vorrichtung zum Erkennen von Signalen nach Anspruch 4, **dadurch gekennzeichnet, dass** die Vorverarbeitungsmodule (30), der Demodulator (301), die Tiefpassfilter (302, 303), das Phasenschätzmodul (31) und das Analysemodul (32) digitale Verarbeitungen nach der Umwandlung der analogen Signale durch einen Analog-Digital-Wandler (21) durchführen.

6. Vorrichtung zum Erkennen von Signalen nach Anspruch 5, **dadurch gekennzeichnet, dass** das Analysemodul (32) die Stabilität der Phase durch Zählen der Samples (H) aus mehreren Samples des Phasensignals stromaufwärts von einem Sample zu einem Zeitpunkt tₙ von Phase ϕₒ beurteilt, dessen Phase ϕₖ innerhalb der Referenzschablone liegt, die durch einen ermittelten Schwellenwert (ζ) um die Phase (ϕₒ definiert wird.

7. Vorrichtung zum Erkennen von Signalen nach einem der Ansprüche 2 bis 6, die ein Erkennungsmodul (12) umfasst, das charakteristische Impulse auf der Basis des vom Verstärker (11) rekonstituierten ersten Signals (RSSI) erkennt, **dadurch gekennzeichnet, dass** das Phasenschätzmodul (50) die Anwesenheit eines von dem Erkennungsmodul (12) erkannten Impulses bestätigt, wenn die Phase stabil ist, oder ansonsten die Anwesenheit eines erkannten Impulses verneint.

## Claims

1. A device for a secondary radar for detecting phase-unmodulated pulse signals or sequences of pulses with a determined frequency, comprising at least one amplifier (11) receiving a radiofrequency signal and reconstituting at least one first signal (RSSI) that represents the envelope of the input signal and a second normalised signal, **characterised in that** it comprises a module (50) for estimating the stability of the phase, which comprises means (31) for estimating the phase of the radiofrequency signal which measure the phase of said second normalised signal relative to a periodic reference signal, said estimation means (31) reconstituting phase information relating to said signal, and comprises analysis means (32) for assessing the timing stability of the phase, said analysis means (32) being configured to assess the variations of the phase in a determined time window before a given instant.

2. The signal detection device according to claim 1, **characterised in that** the means are configured to assess the variations of the phase in a determined time window before a given instant relative to a reference frame.

3. The signal detection device according to claim 1, **characterised in that** said amplifier (11) is a logarithmic amplifier.

4. The signal detection device according to any one of the preceding claims, **characterised in that** said means for estimating the phase of the radiofrequency signal are implemented by a pre-processing module (30) transposing the normalised signal into baseband, a demodulator (301) dividing the normalised signal into phase (I) and quadrature (Q) components, said components being filtered by low-pass filters (302, 303) with cut-off frequencies higher than the determined frequency of the pulse sequences, with a phase estimation module (31) then determining the value of the phase of the radiofrequency signal that is equal to the arc tangent of the ratio between the quadrature and phase components, arctan (Q/I), with an analysis module (32) assessing the stability of the phase during a time window of determined duration.

5. The device for detecting signals according to claim 4, **characterised in that** said pre-processing modules (30), demodulator (301), low-pass filters (302, 303), phase estimation module (31) and analysis module (32) carry out digital processing following the conversion of the analogue signals by an analogue-digital converter (21).

6. The device for detecting signals according to claim 5, **characterised in that** said analysis module (32) evaluates the stability of the phase by counting the number of samples (H), from among a plurality of samples, of the phase of a signal upstream of a sample at a time tₙ of phase ϕₒ, the phase ϕₖ of which is within a reference frame defined by a threshold value (ζ) determined around the phase ϕₒ.

7. The device for detecting signals according to any one of claims 2 to 6, comprising a detection module (12) detecting characteristic pulses on the basis of said first signal (RSSI) reconstituted by the amplifier (11), **characterised in that** said phase estimation module (50) confirms the presence of a pulse detected by said detection module (12) if the phase is stable or otherwise denies the presence of a detected pulse.
